## Europäisches Patentamt

## European Patent Office

## Office européen des brevets

(11) Publication number: **0 040 471**
**B1**

(12) **EUROPEAN PATENT SPECIFICATION**

(45) Date of publication of patent specification: **02.10.85**

(21) Application number: **81301708.4**

(22) Date of filing: **16.04.81**

(51) Int. Cl.⁴: **H 02 H 3/38,** H 02 H 7/26, G 06 F 15/46, G 06 F 15/20

(54) **Protective relaying system.**

(30) Priority: **20.05.80 JP 65882/80**

(43) Date of publication of application:
**25.11.81 Bulletin 81/47**

(45) Publication of the grant of the patent:
**02.10.85 Bulletin 85/40**

(84) Designated Contracting States:
**CH DE GB LI SE**

(56) References cited:
**DE-A-2 264 064**
**DE-B-1 292 726**
**GB-A-2 008 345**
**US-A-4 107 778**
**US-A-4 146 750**

**ELEKTRONIK, Vol. 27, No. 11, 1978 München W. BAUER "16-Kabal-Datenerfassung in IC-Baiweise" pages 54 to 56**

**ELEKTRONIK, Vol. 28, No. 26, 1979 München E. OBERMEIER et al. "Messwerterfassungssysteme und Sensorprinzipien" pages 23 to 29**

(73) Proprietor: **Kabushiki Kaisha Toshiba 72, Horikawa-cho Saiwai-ku Kawasaki-shi Kanagawa-ken 210 (JP)**

(72) Inventor: **Yamaura, Mitsuru 72, Horikawa-cho Saiwai-ku Kawasaki-shi Kanagawa-ken (JP)**
Inventor: **Kondow, Ryotaro 72, Horikawa-cho Saiwai-ku Kawasaki-shi Kanagawa-ken (JP)**
Inventor: **Inagaki, Junichi 72, Horikawa-cho Saiwai-ku Kawasaki-shi Kanagawa-ken (JP)**

(74) Representative: **Shindler, Nigel et al BATCHELLOR, KIRK & EYLES 2 Pear Tree Court Farringdon Road London EC1R 0DS (GB)**

(56) References cited:
**IEEE TRANS. ON COMPUTERS, Vol. C-29, No. 2, February 1980 New York R.A. CLIFF "Digital Multiplexing of Analog Data in a Microprocessor Controlled Data Acquisition System" pages 200 to 202**

## Description

This invention relates to a protective relaying system and, more particularly, to a protective relaying system utilizing a digital computer for protecting an electric power system.

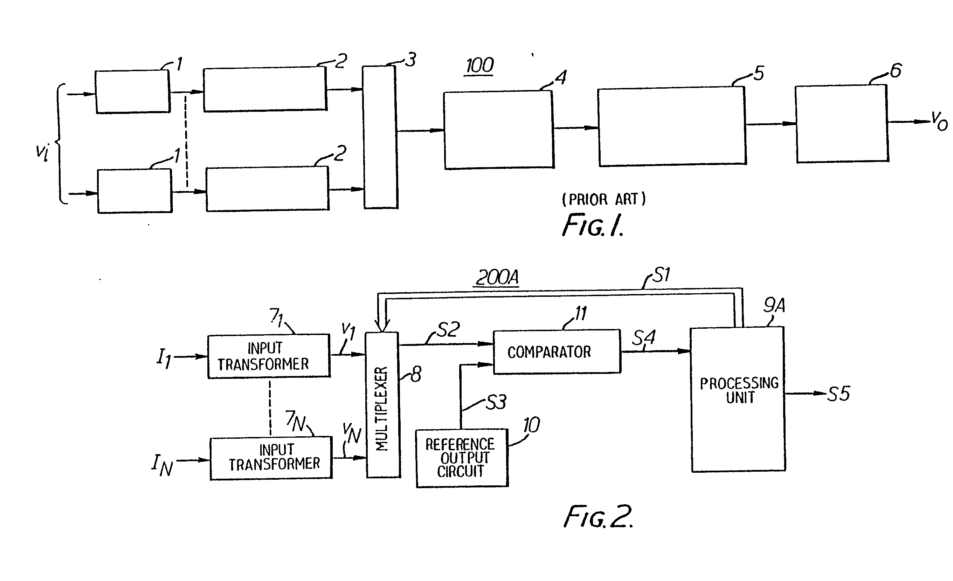

Recently a protective relaying system using a digital computer, such as a mini-computer or a micro-computer, has been developed which utilizes modern digital techniques. In such a protective relaying system using a digital computer, hereinafter referred to as a digital protective relaying system, an electrical value in an electric power system is converted to a digital quantity and a relay decision is made by processing the digital quantity in the digital computer. Figure 1 of the accompanying drawings is a block diagram illustrating one example of such a conventional digital protective relaying system 100. In Figure 1, a plurality of information values representing voltages and currents of the electric power system are applied to input transformers (not shown) and are converted into signals Vi of suitable amplitude for application to filters 1, which pick out the fundamental wave components. The output signals of the filters 1 are applied to sample and hold circuits 2 where the signals are held for a predetermined time and simultaneously sampled. The output signals of the sample and hold circuits 2, the so-called "sampled data", are applied to a multiplexer 3 where they are selected consecutively and are sent serially to an analog to digital converter 4 which converts them into digital signals. The digital signals are then applied to a central processing unit 6 through a direct memory access control circuit 5. The central processing unit 6 executes a relaying decision-making calculation on the applied data expressing the information regarding voltages and currents of the electric power system, and produces a relay output signal Vo according to the results of the relaying calculation for the control of the electrical system.

The digital protective relaying system 100 shown in Figure 1 can execute relay decisions in respect of many elements. For example, a remote protective relaying system for transmission lines having up to approximately one hundred elements can be embodied in the system 100 shown in Figure 1. Moreover, the system 100 is advantageous in that standardization of hardware can be promoted because modification of the method of protection can be achieved by modifying the program of the digital computer. However, a malfunction in a protective relaying system for protecting an electric power system has an extremely large effect on the electric power system and thus can cause serious problems. To avoid this, a protective relay for fail safe use (hereinafter referred to as a fail safe relay) is provided in the protective relaying system. For example, in a remote protective relaying system, an overcurrent relay, an overvoltage relay, and an undervoltage relay are used as fail safe relays. Most of these fail safe relays are of the type that utilize a single electrical quantity in making a relay decision and that relay decision is executed by simple processing. Therefore, in the case of a protective relaying system using a digital computer, where a single electrical value quantity is utilized in making a relay decision, as in a fail safe relay, the system as shown in Figure 1 has more processing capacity than necessary. This means that the system has more circuitry than it needs and thus is wasteful and expensive, and also has an unnecessarily high power consumption which generates much heat. The heat has an adverse affect on the digital computer which is mainly composed of integrated circuits. Moreover, the more parts the system has, the lower its reliability.

According to conventional techniques as described above, it has been very difficult to construct a digital protective relaying system which uses a digital computer, which has suitably limited processing capacity, and in which a single electrical quantity is utilized in making a relay decision.

From GB—A—2008345 a protective relay system is also known, comprising selection means (a multiplexer) which receives a plurality of input signals and outputs a selected one of those signals; a processing unit comprising a digital computer; and a comparator which is independent of the processing unit and which is coupled to the selecting means to compare the selected input signal with a predetermined reference to generate a decision signal according to the result of the comparison, that decision signal being supplied to the processing unit which develops from the decision signal a relay output signal.

A system such as that described in GB—A—2008345 suffers from the disadvantage that it may be triggered by transients in the input signals to generate the relay output signal. Where for example the input signals are parameters of an electrical supply system, as in the case of the British patent application, the supply may be completely closed down by a transient surge in one or more of the phases.

An object of the invention is to provide a protective relaying system which is substantially unaffected by short term variations in the input signals. With that aim in view, the protective system of the present invention provides that the processing unit is arranged to generate the relay output signal only when the decision signal becomes a predetermined logic value consecutively for a predetermined number of times, and that the reference generating means includes means for producing a plurality of reference signals and means for selecting one of the reference signals as the predetermined reference.

The invention will be more readily understood by way of example from the following description of protective relaying system in accordance therewith, reference being made to Figures 2 to 15 of the accompanying drawings, in which:

Figure 2 is a block diagram showing a protective relaying system;

Figure 3 illustrates a reference voltage circuit for producing a reference signal;

Figure 4A is a flow chart illustrating the sequence of steps executed in the processing unit 9A shown in Figure 2;

Figure 4B illustrates waveforms used to explain the operation of the protective relaying system shown in Figure 2;

Figures 5, 6 and 7 illustrate modifications of the system of Figure 2;

Figure 8 is a flow chart illustrating the sequence of steps executed in the processing unit 9D of Figure 7;

Figures 9 to 14 show further modifications in the protective relaying system; and

Figure 15 is a block diagram showing an input signal processing circuit used between an input transformer and a multiplexer in the protective relaying system.

Referring now to the drawings, wherein like reference numerals designate identical or corresponding parts throughout the several views, Figure 2 shows a protective relaying system 200A having input transformers $7_1$ to $7_N$ which receive input voltage or current informations signals $I_1$—$I_N$ from an electric power system and convert those information signals into voltage signals $V_1$—$V_N$ of suitable amplitude for processing in the following stages. A selector, such as for example a multiplexer 8, is connected to the outputs of the input transformers $7_1$—$7_N$ and receives the voltage signals $V_1$ to $V_N$. Under control of a selection signal S1 from a processor unit 9A, the selector (multiplexer 8) selects one of the voltage signals $V_1$ to $V_N$ and produces a corresponding selected input signal S2.

A reference output circuit 10 generates a reference signal S3. A comparator 11 is connected to the output of the multiplexer 8 and to the reference circuit 10, and receives the selected input signal S2 and the reference signal S3. The comparator 11 compares the selected input signal S2 with the reference signal S3 and produces an output decision signal S4 according to the result of the comparison, that signal S4 being directed to the processing unit 9A. The decision signal S4 is a binary signal determined as follows: when $S2 \geq S3$, S4 is a logic "1", and when $S2 < S3$, S4 is a logic "0". The processing unit 9A processes the decision signal S4 according to a predetermined program and produces a relay output signal S5 dependent on the result of the decision signal S4. The processing unit 9A can be a micro-computer or other suitable device.

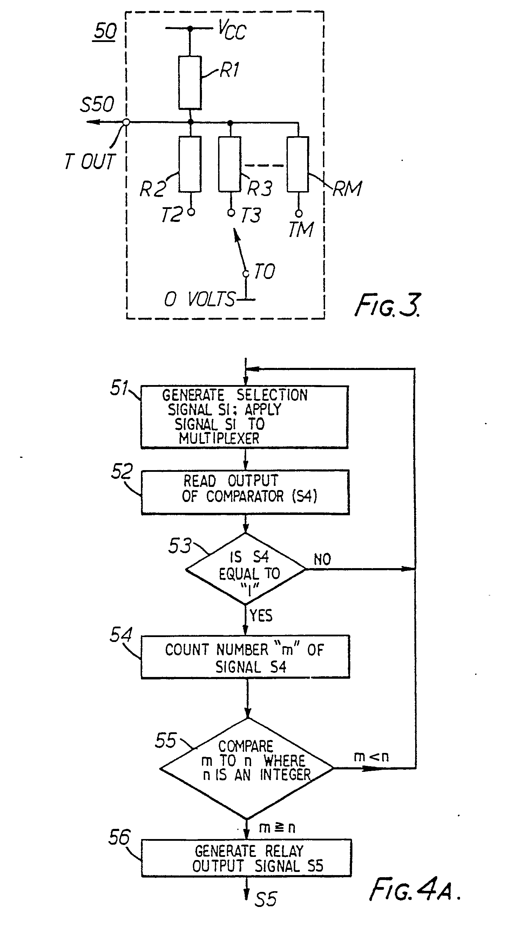

Figure 3 illustrates one form of circuit 50 that can be used as the reference circuit 10 of Figure 2, the output S50 of circuit 50 being used as the reference signal S3. The reference voltage circuit 50 of Figure 3 includes a first resistor R1 and second to Mth resistors, R2—RM. One terminal of the first resistor R1 is connected to a power source Vcc, while the other terminal is connected to one terminal of each of the second to Mth resistors, R2 to RM, and to an output terminal T out where the reference voltage signal S50 is produced. The other terminals $T_2$ to $T_M$ of the second to Mth resistors, are connected to a switching device by which any one of those terminals may be selected for connection to terminal T0 at zero voltage. Reference voltage signal S50 is then determined by dividing the voltage between the power source Vcc and ground by the ratio of the first resistor R1 and the selected earthed resistor, R2 to RM. Thus (M − 1) different voltage values for the reference signal S50 can be obtained by using various combinations of the first resistor R1 with one of the resistors R2 to RM. Other circuits for generating a reference voltage which can be adjusted can of course be employed in place of that illustrated in Figure 3.

In the operation of the protective relaying system 200A of Figure 2, the voltage signal V selected by the multiplexer 8 under control of the signal S1 from unit 9A is compared in comparator 11 with the reference signal S3 and the resulting binary decision signal S4 is applied to the processing unit 9A. All the input voltage or current signals I (referred to as the relay input signals) are in this way sequentially selected by the multiplexer and the resulting decision signals S4 are applied in turn to unit 9A. Processing unit 9A processes each decision signal as it arrives and outputs a relay output signal S5.

An example of the operation performed in the processing unit 9A for one relay input signal of the plurality of relay input signals $I_1$—$I_N$, is illustrated in Figure 4A. In step 51, unit 9A generates the selection signal S1 for selecting one of the relay input signals $I_1$—$I_N$ in the multiplexer 8. The resulting relay input signal S2 to be examined for a relay decision is applied to the comparator 11 as the selected input signal S2 and compared with the reference signal S3, the decision signal S4 being generated according to the result of the comparison. In step 52, the processing unit 9A reads the decision signal S4. In step 53, when the decision signal S4 is "0", the relay input signal is smaller than the reference signal value S3, and the processing returns to step 51 to examine the next input signal I. In step 53, when the decision signal S4 is "1", the relay input signal is equal to or larger than the reference value and the processing goes to the next step 54. In steps 54 and 55, the processing for a relay decision is executed. In step 54, the number "m" of the decision signal S4 is counted. In step 55, the counted number m is compared with a predetermined integer "n". When the number m is smaller than the integer n, the processing goes back to step 51; but when the number m is equal to or larger than the integer n, the processing goes to step 56, where the relay output signal S5 is generated. The object of counting the number m of the decision signal S4 in step 54 is to prevent malfunctions due to noise or other cause. The relay output signal S5 for a particular input signal I is generated only when the decision signal S4 for that input signal is "1" consecutively, n times or more. Therefore, when the count number m is smaller than n, no relay output signal S5 is generated.

The operation of the protective relaying system 200A is illustrated by Figure 4B which shows the decision making process for a single input signal $I_1$. In Figure 4B, times $t_0$ through $t_{23}$ illustrates the times when the relay decisions regarding the relay input signal $I_1$ are made in the processing unit 9A. The relay input signal $I_1$, and therefore signal S2, is in a steady state from a time $t_0$ to a time $t_{15}$, but after time $t_{15}$ each starts to increase due to a fault generated in the electric power system. Up to the time $t_{15}$, reference signal S3 is larger than signal S2 derived from the relay input signal $I_1$ and therefore decision signal S4 is "0" and relay output signal S5 continues to be "0".

At time $t_{15}$, the relay input signal $V_1$ and signal S2 start to increase due to the fault in the electric power system. At time $t_{16}$, after the fault arises, signal S2 is still smaller than the reference signal S3, so that the decision signal S4 and the relay output signal S5 continue to be "0" as in the steady state condition. At time $t_{17}$, as signal S2 of the relay input signal $I_1$ becomes larger than the reference signal S3, the decision signal S4 becomes logic "1" only when the comparison regarding the relay input signal $I_1$ is performed in the comparator 11, for example during the time between $t_{17}$ and $t'_{17}$. After the time $t'_{17}$, the decision signal S4 regarding the other relay input signals $I_2$—$I_N$ are examined and corresponding decision signals S4 generated. Figure 4B assumes that the other relay input signals $I_2$—$I_N$ are in steady state condition. Consequently, the processing unit 9A generates a "1" relay output signal S5 only when the decision signal S4 corresponding to relay input signal $I_1$ becomes "1" consecutively for n times. In the case of Figure 4B, n is 2. Therefore, at time $t_{17}$, the relay output signal S5 continues to be "0". At the time $t_{18}$, as the decision signal S4 becomes "1" again, the processing unit 9A generates the relay output signal S5 of "1". The relay output signal S5 continues to be a logic "1" until the time $t_{22}$. At the time $t_{22}$, as the relay input signal $I_1$ becomes smaller than the reference signal S3, the decision signal S4 is "0" and the relay output signal S5 returns to "0".

As can be understood from the flow chart in Figure 4A, the number of steps for processing one relay input is small, so that the processing time is also very small. Usually each step shown in Figure 4A is executed within a time span of a few microseconds up to approximately one hundred microseconds in a micro-computer. For example, if the average execution time of each step is assumed to be 10 microseconds and the predetermined integer n is assumed to be 2, the processing time for generating the relay output signal S5 is 100 microseconds, the number of necessary steps being eleven. Here, the operation times in both the multiplexer 8 and the comparator 11 are very small compared with the execution time in the processing unit 9A. Similarly, when three relay input signals are to be processed for relay decisions, the processing time is 330 microseconds, which is still very small in comparison with a half cycle time of the relay input signals (10 milliseconds for the case of a 50 Hz power system frequency). When a plurality of relay input signals are processed repeatedly as described above, the relay decision making for each relay input signal is repeated at very short intervals. Therefore, the relay decision for each relay input signal can be made with minimal error.

The operations performed in the processing unit 9A are not restricted to the processing steps shown in Figure 4A, and other programs can be used, as is apparent to those skilled in the art.

As described above, the number of steps executed in the processing unit 9A in the protecting relaying system 200A of Figure 2 is much smaller than that of the central processing unit 6 in the conventional protective relaying system 100 of Figure 1. Therefore, processing unit 9A can be smaller and the digital computer used can have a processing capacity which is lower and slower than that of the conventional central processing unit 6. Thus a micro-computer which has a complete digital processing capability, a so-called one-chip micro-computer, can be used as the processing unit 9A.

The system of Figure 2 also provides a protective relaying system having a suitable processing capacity wherein a single electrical quantity is analyzed for a relay decision using a digital computer. This invention can also provide a protective relaying system having a suitable processing capability for a fail safe relay. The protective relaying system further has reduced power consumption, improved reliability characteristics, and a reduction in size, thereby improving standardization of the hardware.

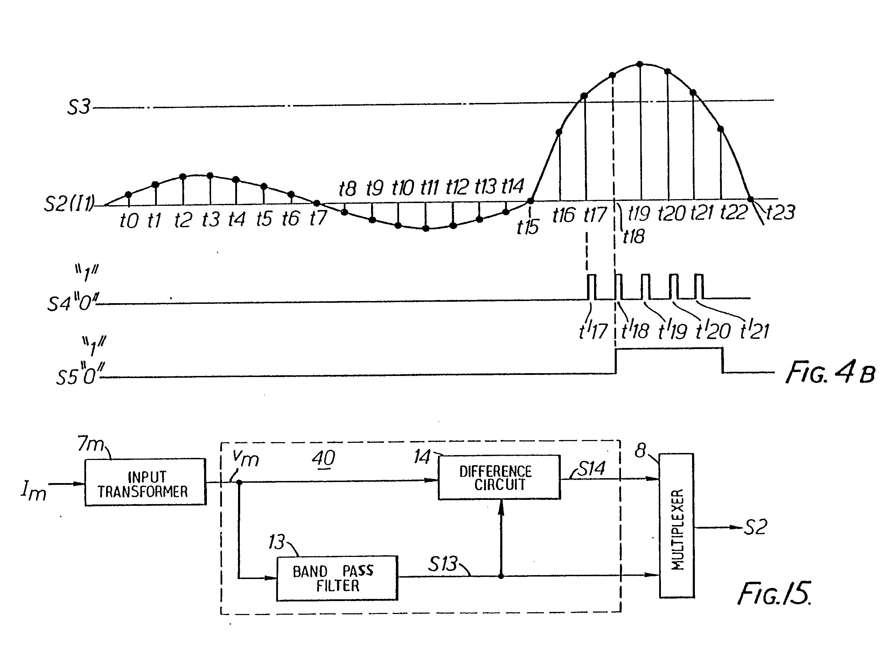

The protective relaying system of Figure 2 is subject to numerous modifications to be described hereinafter. Figure 5 shows a protective relaying system 200B having full-wave rectifiers $30_1$—$30_N$ located between the input transformers $7_1$—$7_N$ and the multiplexer 8, the remainder of the system being the same as that of system 200A of Figure 2. The voltage signal $V_1$—$V_N$ appearing at the outputs of the input transformers $7_1$—$7_N$ are full-wave rectified in the full-wave rectifiers $30_1$—$30_N$ and are applied to the multiplexer 8 where one of the rectified signals is selected to produce the selected input signal S2, the selected input signal S2 then corresponding to the full-wave rectified signal of one of the relay input signals $I_1$—$I_N$. In the system of Figure 2, the selected input signal S2 is executed for a relay decision only when its polarity is the same as that of the reference signal S3; that is, only in alternate half cycles of the selected input signal S2 are treated for a relay decision in the comparator 11. On the other hand, in the system of Figure 5, both half cycles of each cycle of the selected input signal S2 can be compared for a relay decision in the comparator 11. A reduction in relay operation time is thus achieved.

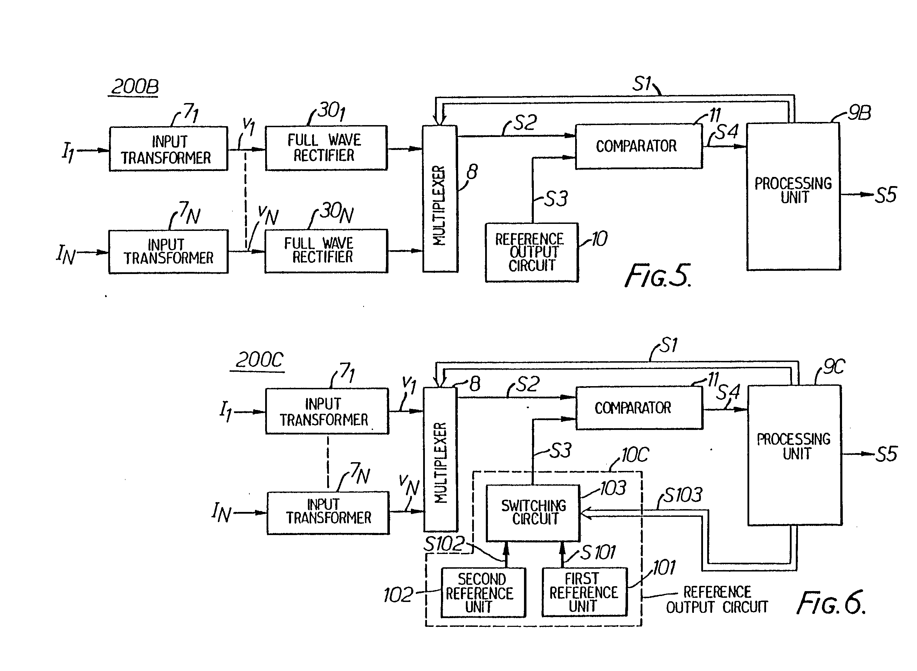

The system 200C of Figure 6 has a processing unit 9C and a reference output circuit 10C in place of processing unit 9A and the reference output circuit 10 of Figure 2. Processing unit 9C includes all the functions of the processing unit 9A and also has the capability of producing a switching signal S103. The reference output circuit 10C has a first reference unit 101 for producing a first reference signal S101, a second reference unit 102 for producing a second reference signal S102, and a switching circuit 103. Switching circuit 103 is connected to the first and second reference units 101, 102 and receives the first and second reference signals S101, S102, and switching signal S103 from processing unit 9C. Switching circuit 103 selects one of the first and second reference signals S101, S102 according to the switching signal S103 to produce the reference signal S3 which is applied to the comparator 11. Each of the first and second reference units 101, 102 can be in the form shown at 50 in Figure 3. Since the system 200C includes two kinds of reference signals S101, S102 in the first and second reference units 101, 102, the system can perform two different protective functions such as those of an overcurrent relay and an undervoltage relay. The operation of the processing unit 9C is achieved by adding a step for outputting the switching signal S103 prior to step 51 in the flow chart shown in Figure 4A. Instead of the two reference units 101, 102 shown in Figure 6, three or more reference units can be employed, as required.

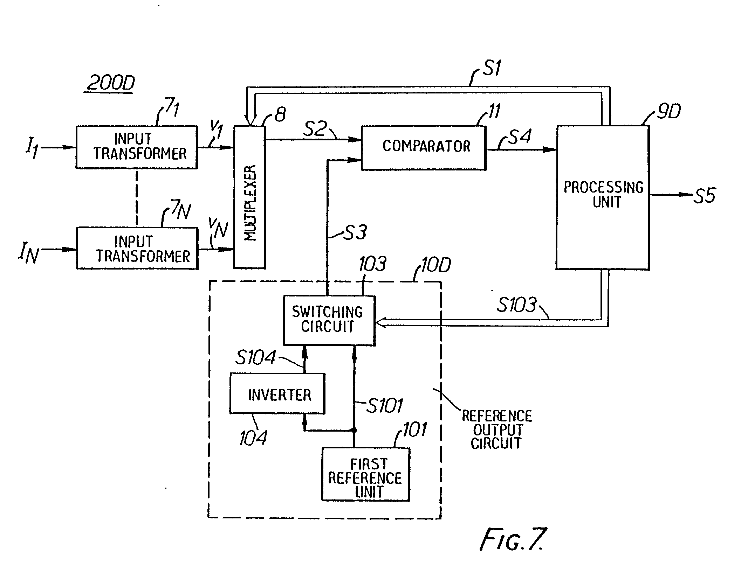

The system 200D of Figure 7 includes a processing unit 9D and a reference output circuit 10D in place of the processing unit 9A and the reference output circuit 10 of Figure 2. Processing unit 9D includes the functions described below and includes the capability for producing the switching signal S103. Reference output circuit 10D includes a first reference unit 101, an inverter 104 for inverting the first reference signal S101 to produce an inverted reference signal S104, and a switching circuit 103. The first reference unit 101 and the switching circuit 103 are the same as the circuits described with respect to the system of Figure 6. The switching circuit 103 selects either the first reference signal S101 or the inverted reference signal S104 according to the switching signal S103 to produce the reference signal S3 which is applied to the comparator 11. Since the reference signal S3 can be of either polarity (positive or negative) according to switching signal S103, the relay operation time in system 200D is reduced, as in the system 200B of Figure 5.

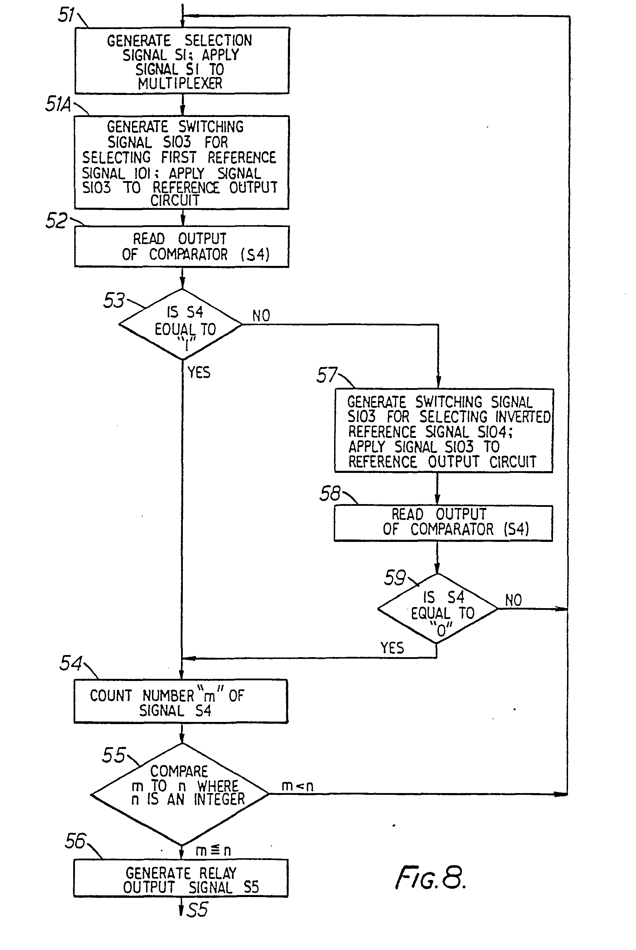

Next, the process steps executed in processing unit 9D will be described in detail, in connection with the flow chart of Figure 8, which shows the operations performed in the processing unit 9D with regard to only one relay input signal out of the plurality of relay input signals $I_1$—$I_N$. In step 51, the processing unit 9D generates the selection signal S1 as before. In step 51A, the processing unit 9D generates the switching signal S103 for selecting the first reference signal S101 corresponding to the polarity of the input. The comparator 11 compares the selected input signal S2 and the reference signal S3 which corresponds to the first reference signal S101 and produces the decision signal S4 according to the result of the comparison. Steps 52 and 53 are identical to those described above with respect to Figure 4A. In step 53, when the decision signal S4 is "0", the processing goes to step 57; however, when the decision signal S4 is "1" the processing goes to step 54. In step 57, the processing unit 9D generates the switching signal S103 for selecting the inverted reference signal S104. Then the comparator 11 compares the selected input signal S2 and the reference output signal S3 which corresponds to the inverted reference signal S104 and produces the decision signal S4 according to the result of the comparison. In step 58, the processing unit 9D reads the decision signal S4. In step 59, when the decision signal S4 is "1", the absolute value of the relay input signal is equal to or smaller than the absolute value of the reference value and the processing goes back to step 51 to examine the next input signal. In step 59, when the decision signal S4 is "0", the absolute value of the relay input signal is larger than the absolute value of the reference value and the processing goes to step 54. Steps 54 through 56 are identical to those described above with respect to Figure 4A.

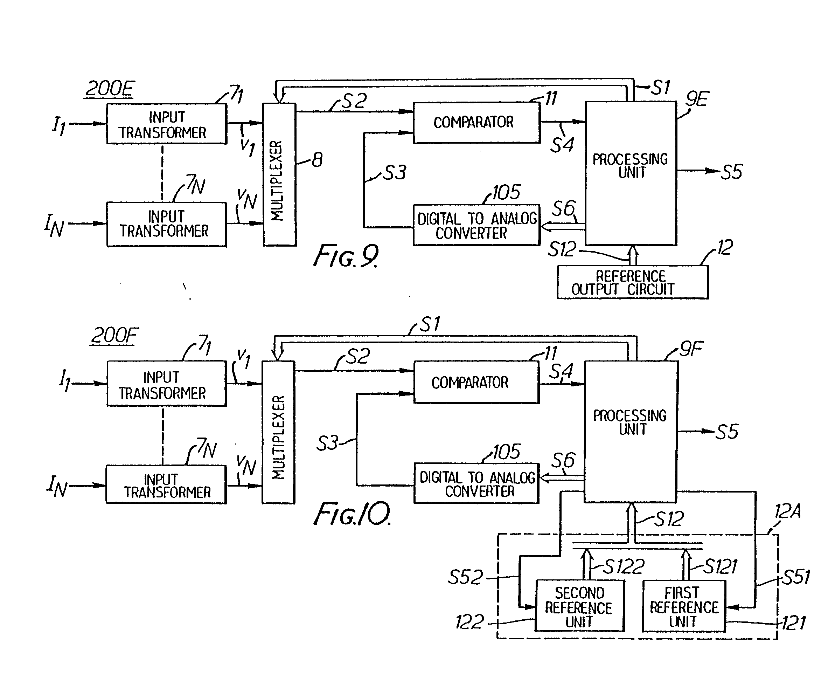

The system 200E of Figure 9 has a processing unit 9E, a digital to analog converter 105, and a reference output circuit 12 in place of the processing unit 9A and the reference output circuit 10 of Figure 2. The reference output circuit 12 produces a digital signal S12 and applies it to processor unit 9E which converts the digital signal S12 into a digital reference signal S6 by a predetermined conversion method. First, the processing unit 9E converts the digital signal S12 into a first reference signal. The first reference signal is then inverted to form an inverted reference signal. The processing unit 9E then selects either the first reference signal or the inverted reference signal to produce the digital reference signal S6. The digital to analog converter 105 is connected to the processing unit 9E to receive the digital reference signal S6 and converts the digital reference signal S6 into an analog signal which is applied to the comparator as the reference signal S3. The processing unit 9E operates according to the flow chart of Figure 8 with the exception that in step 51A the digital reference signal S6, corresponding to the first reference signal, is produced instead of the switching signal S103, and in step 57 the digital reference signal S6, corresponding to the inverted reference signal, is produced instead of the switching signal S103. The processing steps for receiving the digital signal S12, converting the digital signal S12 into the digital reference signal S6 are also added. The remainder of system 200E is the same as that of system 200A of Figure 2. The reference output circuit 12 can be constructed in known manner with digital switches.

As the digital signal S12 is applied to the processing unit 9E, checking of the digital signal S12 for correctness can be performed easily by the unit 9E. Also, test signals can be applied to the comparator 11, in order easily to check the performance of the hardware in the system 200E, thereby reducing the task of periodic inspection of the protective relaying system 200E. The reference signal S3 can be of either polarity and therefore the relay operational time in system 200E can be reduced as in system 200D of Figure 7.

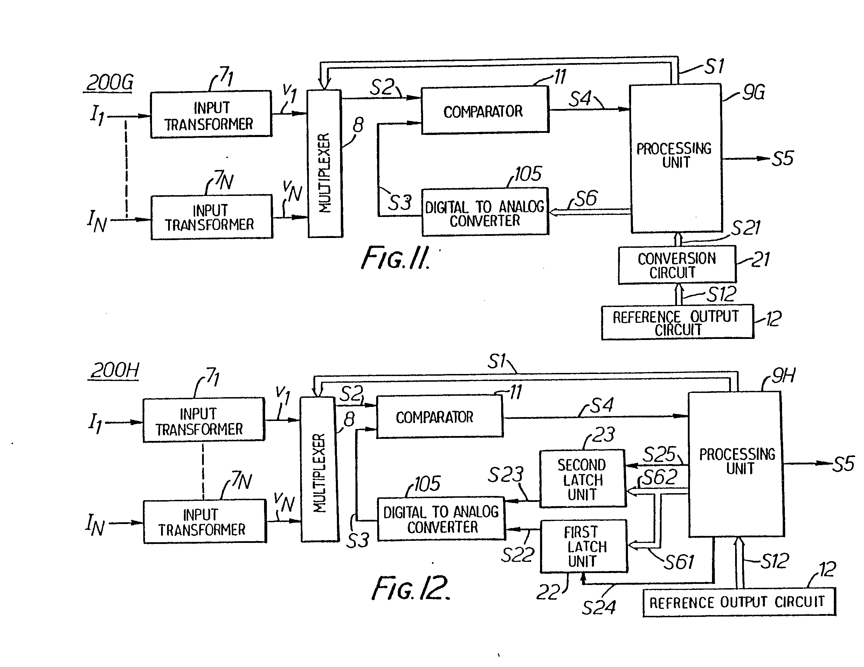

The system 200F of Figure 10 has a processing unit 9F and a reference output circuit 12A incorporating a first reference unit 121 and a second reference unit 122, instead of the unit 9E and the reference output circuit 12 shown in Figure 9. Processing unit 9F has the capability of producing a first read signal S51 and a second read signal S52. The first reference unit 121 receives the first read signal S51 and produces a first digital signal S121 according to the first read signal S51. The second reference unit 122 receives the second read signal S52 and produces a second digital signal S122 according to it. The processing unit 9F receives either the first digital signal S121 or the second digital signal S122 as the digital reference signal S12. The other functions of the processing unit 9F are the same as those of the processing unit 9E of Figure 9. The protective relaying system 200F can perform two types of protective relay functions, thereby further reducing the size of the overall system.

The system 200G of Figure 11 has a processing unit 9G in place of the unit 9E of Figure 9. A conversion circuit 21 receives the digital signal S12 from reference output circuit 12, and converts by a predetermined conversion method the digital signal S12 into a first reference signal S21, which is applied to the processing unit 9G. The conversion method is the same as that used for converting the digital signal S12 into the first reference signal in the processing unit 9E of Figure 9. Therefore, the unit 9G receives the first reference signal S21 and inverts the first reference signal S21 to an inverted reference signal. The processing unit 9G then selects either the first reference signal S21 or the inverted reference signal to produce the digital reference signal S6. The other functions of the processing unit 9G are the same as those of the processing unit 9E of Figure 9.

Because, in Figure 11, the conversion of digital signal S12 into the first reference signal is performed in conversion circuit 21, and not by unit 9G, a digital computer can be utilized as the processing unit 9G which has a lower processing capacity than that of the processing unit 9E of Figure 9, thereby providing a further reduction in size. Conversion circuit 21 is usually constructed by using a read-only memory, as is apparent to those skilled in the art.

In system 200H of Figure 12, processing unit 9H takes the place of unit 9E of Figure 9. The system also includes a first latch circuit 22 and a second latch circuit 23. The processing unit 9H converts the digital signal S12 into a second digital signal having a larger bit length than the normal bit length of the processing unit 9H (e.g. signal S12 may have a 16 bit length, while the processor bit length is normally 8). The second digital signal consists of a lower bit signal S61 and an upper bit signal S62. Processing unit 9H has the capability of producing a first write signal S24 and a second write signal S25. The first latch circuit 22 receives the lower bit signal S61 and the first write signal S24. The first latch circuit 22 latches the lower bit signal S61 to produce a lower bit reference signal S22 by receiving the first write signal S24. The second latch circuit 23 receives the upper bit signal S62 and the second write signal S25. The second latch circuit 23 latches the upper bit signal S62 to produce an upper bit reference signal S23 by receiving the second write signal S25. The digital to analog converter 105 receives the lower bit reference signal S22 from latch circuit 22 and the upper bit reference signal S23 from latch circuit 23. The lower bit reference signal S22 and the upper bit reference signal S23 form a digital reference signal having a larger bit length than the normal bit length of the processing unit 9H wherein the former is the lower part and the latter is the upper part. The system 200H is otherwise as described with reference to Figure 9.

The reference signal S3, which is the output signal of the digital to analog converter 105 in Figure 12, can be controlled more precisely than the reference output value of the processing unit 9H which is limited by the bit length. Therefore, the protective relaying system 200H can perform a more precise control function over a wider range than the protective relaying system 200E of Figure 9.

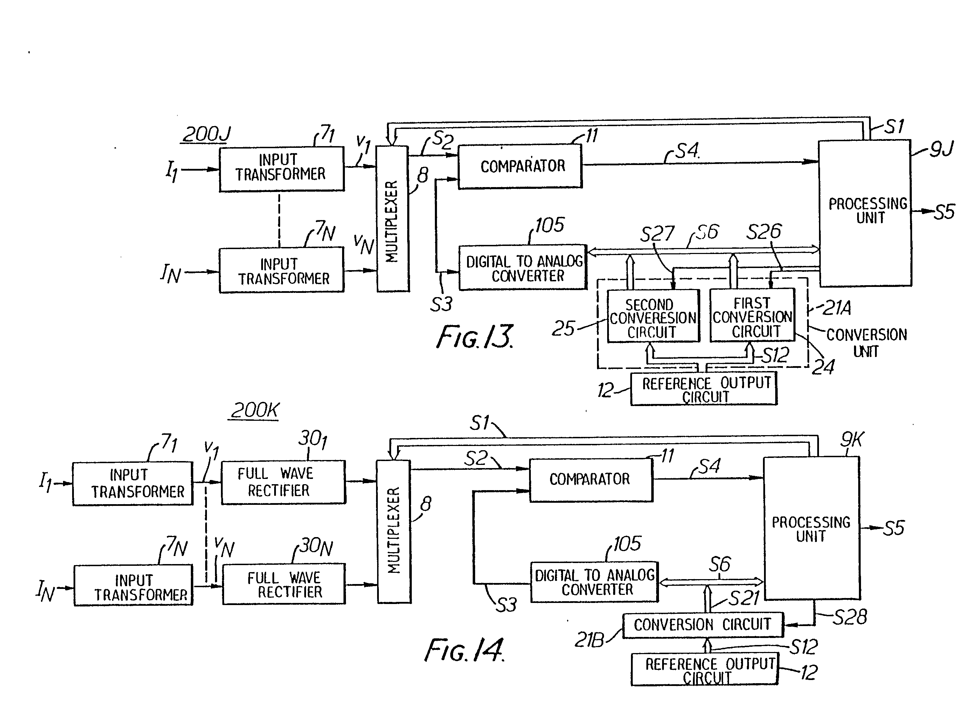

The system 200J of Figure 13 includes a processing unit 9J in place of the processing unit 9H of Figure 11, and a conversion unit 21A formed by a first conversion circuit 24 and a second conversion circuit 25 in place of the conversion circuit 21 of Figure 11. The first and second conversion circuits 24 and 25 receive the digital signal S12 from the reference output circuit 12. First conversion circuit 24 converts digital signal S12 into a first reference signal in the manner described above in relation to the conversion circuit 21 of Figure 11. The second conversion circuit 25 converts the digital signal S12 into an inverted reference signal which is the twos complement value of the first reference signal of the first conversion circuit 24. The processing unit 9J also has the capability of producing a first permission signal S26 and a second permission signal S27. On receiving the signal S26, the first conversion circuit 24 generates the first reference signal as the digital reference signal output S6 of the conversion unit 21A. Similarly, on receiving signal S27, the second conversion circuit 25 generates the inverted reference signal as the digital reference signal output S6 of the conversion circuit 21A. The digital reference signal S6 is applied to both the processing unit 9J and the digital to analog converter 105. The system 200J is otherwise similar to the system 200G of Figure 11.

In system 200J of Figure 13, processing unit 9J can check the digital reference signal S6, which is the output signal of the first or second conversion circuit 24 or 25, by applying the first or second permission signals S26 or S27 and reading the digital reference signal S6. In making a relay decision, the unit 9J must generate the first permission signal S26 and the second permission signal S27; however, the process of converting the digital signal S12 is not performed in unit 9J. Therefore, a digital computer having a still lower processing capability than that of the processing unit 9G of Figure 11 can be used as unit 9J.

Figure 14 shows a preferred protective relaying system 200K. The system of Figure 14 includes a processing unit 9K and a conversion circuit 21B in place of the processing unit 9G and the conversion circuit 21 of Figure 11. The system also includes full-wave rectifiers $30_1$—$30_N$ located between the respective input transformers $7_1$—$7_N$ and the multiplexer 8. The conversion unit 21B receives from reference output circuit 12 the digital signal S12 and converting that signal into the first reference signal S21 as in the conversion circuit 21 of Figure 11. Unit 9K also has the capability of producing a permission signal S28 which is applied to the conversion unit 21B. The conversion unit 21B generates the first reference signal S21 as the digital reference signal S6, which is applied to the processing unit 9K and to the digital to analog converter 105 upon receiving the permission signal S28. The system 200K is otherwise similar to system 200G of Figure 11.

In the protective relaying system 200K described above, since the selected input signal S2, which is applied to the comparator 11, is a full-wave rectified signal, as explained above with respect to the embodiment shown in Figure 5, it is sufficient that the reference signal S3 generated by the digital to analog converter 105 has a single polarity. Therefore, the processing unit 9K merely produces the permission signal S28 to permit the conversion circuit 21B to generate the first reference signal S21 as the digital reference signal S6, and it is not necessary for the digital signal S12 to be converted in the processing unit 9K.

Protective relaying system 200K enables the use as the processing unit of a digital computer having a still lower processing capacity than that of the unit 9G of Figure 11, as in the case of the processing unit 9J of Figure 13. Moreover, the processing unit 9K can check the digital reference signal S6 which is applied to the digital to analog converter 105 by reading the digital reference signal S6. Also, the hardware of the protective relaying system 200K can be easily checked by applying test signals to the comparator 11.

In the protective relaying systems 200G, 200H, 200J and 200K shown in Figures 11 to 14, only one reference output circuit is provided; however, a number of reference circuits can be provided in a protective relaying system which can make relay decisions regarding a number of types of relay elements and can reduce the size thereof, as is apparent to those skilled in the art.

In the protective relaying system described, it is possible to provide a filter to pick out the fundamental wave component of the applied signal. In that case, the filter can be located between the input transformer and the multiplexer. A band-rejection filter can also be used instead of the above-mentioned filter which detects faults, as is apparent to those skilled in the art.

Moreover, an input signal processing circuit may be provided between each input transformer 7 and the multiplexer 8 in the protective relaying system as shown in Figure 15. The system of Figure 15 includes a bandpass filter 13 and a difference circuit 14 in the input signal processing circuit 40. Input voltage or current information $I_m$ from the electric power system is applied to the input transformers 7m and converted into a voltage signal Vm. The bandpass filter 13 is connected to the input transformer 7m and receives the voltage signal Vm. Filter 13 separates out the fundamental wave component of the voltage signal Vm to produce a filtered signal S13. Difference circuit 14 receives the voltage signal Vm from input transformer 7m and the filtered signal S13 from filter 13. The difference circuit 14 determines the fundamental wave component of the difference wave component between the voltage signal Vm and the filtered signal S13 to produce a difference signal S14. The multiplexer 8 receives both the filtered signal S13 and the difference signal S14. The multiplexer selects either the signal S13 or the signal S14 to produce the selected input signal S2.

In the protective relaying system having the input signal processing circuit 40 as shown in Figure 15, when the filtered signal S13 is selected in the multiplexer 8, a relay decision can be made regarding the fundamental wave component of the relay input signal Im. When the difference signal S14 is selected in the multiplexer 8, a relay decision can be made regarding the variable component of the relay input signal Im. It is then possible to detect a change in the relay input due to a fault in the electric power system. By combining two types of relay decision making capability as described above, the protective relaying system can be used to form a variable-width overcurrent relay and/or a variable-width under-voltage relay. The bandpass filter 13 and the difference circuit 14 can easily be formed using an operational amplifier.

Figure 15 illustrates the case where the circuit 40 is provided for one relay input signal Im; however, a similar input signal processing circuit 40 can be provided for each of a plurality of relay input signals $I_1$—$I_N$. Also, in place of the comparator 11 for comparing the voltages of the applied signals, a comparator which compares applied current signals can be used.

## Claims

1. A protective relaying system comprising, reference generating means (10; 12, 9) for generating a predetermined reference (S3), a processing unit (9) including means for producing a selection signal (S1), selecting means (8) for receiving a plurality of input information signals (V) and connected to receive the selection signal (S1) from the processing unit (9) for selecting one of the input information signals (V) to produce a selected input signal (S2) according to the selection signal (S1), and a comparator (11) which is independent of the processing unit (9) and which is coupled to receive the selected input signal (S2) from the selecting means (8) and the predetermined reference (S3) from the reference generating means (10; 12, 9) for comparing the selected input signal (S2) with the predetermined reference (S3) and to generate a single binary decision signal (S4), delivered to the processing unit (9) which generates a relay output signal (S5), characterised in that the processing unit (9) is arranged to generate the relay output signal (S5) only when the decision signal (S4) becomes a predetermined logic value consecutively for a predetermined number of times, and that the reference generating means (10; 12, 9) includes means for producing a plurality of reference signals and means for selecting one of the reference signals as the predetermined reference (S3).

2. A protective relaying system according to claim 1, characterised in that the reference generating means (10C; 10D) is arranged to generate at least two reference output signals (S101, S102; S101, S104) and including switching means (103) under the control of a switching signal (S103) from the processing means (9) for selecting one of the reference output signals as the predetermined reference (S3) (Fig. 6 and 7).

3. A protective relaying system according to Claim 2, characterised in that the generating means (10C) comprise at least two reference unit means (101, 102) each for generating a separate reference output signal (S101 or S102) which is applied to the switching means (103) (Fig. 6).

4. A protective relaying system according to Claim 2, characterised in that the generating means (100) comprise a reference unit means (101) for generating an output reference (S101), an inverter (104) connected to receive the output reference signal and to produce an inverted reference signal (S104), and means for applying the output reference signal (S101) and the inverted reference signal (S104) to the switching means (103) (Fig. 7).

5. A protective relaying system according to any one of the preceding claims, characterised in that the reference generating means or each of the reference generating means comprises a power source having first and second terminals (Vcc, To); an output terminal ($T_{OUT}$), a first resistor (R1) coupled between the first terminal (Vcc) of the power source and the output terminal ($T_{OUT}$); a plurality of second resistors (T2—Tm), each having first and second terminals, each of the first terminals of the second resistors being coupled to the output terminal ($T_{OUT}$); and second selection means coupled between the second terminal (To) of the power source and the second terminals of the second resistors (T2—Tm) for selectively coupling the second terminals of any one of the second resistors to the second terminal (To) of the power source (Fig. 3).

6. A protective relaying system according to Claim 1, characterised in that the reference generating means (10; 12, 9) include means (12, 9) for deriving a digital reference signal (S6), a digital to analog converter (105) for converting the digital reference signal (S6) into an analog reference signal, and means for applying the analog signal to the comparing means (11) as the predetermined reference (S3) (Fig. 9—11, 13, 14).

7. A protective relaying system according to Claim 6, characterised in that the processing means (9) is arranged to supply the digital reference signal (S6).

8. A protective relaying system according to Claim 7, characterised in that there is a reference output circuit (12) for producing a digital signal (S12) and for applying that signal to the processing means (9) which is arranged to convert it into the digital reference signal (S6) (Fig. 10).

9. A protective relaying system according to Claim 8, characterised in that the processing means (9) is arranged to produce a first read signal (S51) and a second read signal (S52), and wherein the reference output circuit means (12) comprises: first reference unit means (121) for producing a first digital reference signal (S121); second reference unit means (122) for producing a second digital reference signal (S122); and means coupled to the processing unit (9) for receiving the first read signal (S51) and the second read signal (S52) and for selecting one of the first and second digital reference signals (Fig. 10).

10. A protective relaying system according to Claim 8, characterised in that the means (12, 9) further comprise first and second latch means (22, 23), and wherein the processing unit (9) is further arranged to produce a first write signal (S24) and a second write signal (S25); the processing unit (9) converts the digital signal (S12) into an expanded digital signal having a longer bit length than the bit length of the digital signal (S12), and separates the expanded digital signal into a lower bit signal (S61) and an upper bit signal (S62); the first latch means (22) is coupled to receive the lower bit signal (S61) and the first write signal (S24) from the processing unit (9) for latching the lower bit signal to produce a lower bit reference signal (S22) upon receipt of the first write signal (S24); the second latch means (23) is coupled to receive the upper bit signal (S62) and the second write signal (S25) from the processing unit (9) for latching the upper bit signal (S62) to produce an upper bit reference signal (S23) upon receipt of the second write signal (S25); and the digital to analog converter (105) is coupled to the first latch means (22) for receiving the lower bit reference signal (S22) and coupled to the second latch means (23) for receiving the upper bit reference signal (S23) as the digital reference signal (S6) (Fig. 12).

11. The protective relaying system according to any one of Claims 8 to 10, characterised in that the processing unit (9) is further arranged to convert the digital signal (S12) into a first reference signal; to invert the first reference signal to form an inverted reference signal; and to select either the first reference signal or the inverted reference signal to form the digital reference signal (S6).

12. A protective relaying system according to Claim 7, characterised in that the means (12, 9) for deriving the digital reference signal (S6) comprises a reference output circuit (12) for producing a digital signal (S12), conversion means (21) coupled to receive the digital signal (S12) for converting the digital signal (S12) into a reference signal (S21), and wherein the processing unit (9) is connected to receive the reference signal (S21) for inverting the reference signal (S21) into an inverted reference signal and for selecting one from the reference signal (S21) and the inverted reference signal to produce the digital reference signal (S6) (Fig. 14).

13. A protective relaying system according to Claim 6, characterised in that the means (12, 9) for deriving the digital reference signal comprise a reference output circuit (12) for producing a digital signal (S12); and conversion means (21) coupled to receive the digital signal (S12) from the reference output circuit (12) and coupled to receive a permission signal (S26 or S27) from the processing unit (9), for converting the digital signal (S12) into the digital reference signal (S6) in response to the permission signal (Fig. 13).

14. A protective relaying system according to Claim 13, characterised in that the processing unit (9) is further arranged to receive from the conversion means (21) the digital reference signal (S6) and to check that digital reference signal (S6).

15. A protective relaying system according to Claim 13 or Claim 14, characterised in that the permission signal includes a first enabling signal and a second enabling signal; the conversion means (21) includes a first conversion unit (24) and a second conversion unit (25); the first conversion unit (24) is coupled to receive the digital signal (S12) from the reference output circuit (12) and the first enabling signal from the processing means (9), and converts the digital signal into a first reference signal in response to the first enabling signal; and the second conversion unit (25) is coupled to receive the digital signal (S12) from the reference output circuit (12) and the second enabling signal from the processing unit (9) and converts the digital signal to form an inverted reference signal in response to the second enabling signal; the first reference signal or the inverted reference signal forming the digital reference signal (S6) (Fig. 13).

16. A protective relaying system according to any one of Claims 1 to 3 and 7 to 10, characterised by comprising a plurality of full-wave rectifier means (30) coupled to the inputs of the selecting means (8) for full-wave rectifying the plurality of input signals (V) (Fig. 14).

17. A protective relaying system according to any one of the preceding Claims 1 to 15, characterised by comprising a plurality of input transformer means (7) coupled to the inputs of the selecting means (8) for converting the input signals (V) into a plurality of transformed input signals having predetermined voltage levels.

18. A protective relaying system according to Claim 16, characterised by comprising a plurality of input transformer means (7) coupled to the full-wave rectifier means (30) for converting the input signals (V) into a plurality of transformed input signals having predetermined voltage levels (Fig. 14).

19. A protective relaying system according to Claim 17, characterised by comprising input signal processing means (40) coupled between the input transformer means (7) and the selecting means (8), and comprising bandpass filter means (13) coupled to receive the plurality of transformed input signals from the plurality of input transformer means (7) for filtering each of the transformed input signals and for producing a plurality of filtered input signals (S13) which are supplied to the selecting means (8); and difference circuit means (14) coupled to receive the transformed input signals from the input transformer means (7) and the filtered input signals (S13) from the bandpass filter means (13) for producing a plurality of difference input signals (S14), the difference input signals (S14) being supplied to the selecting means (8), each of the difference input signals (S14) being the difference between one of the transformed input signals and the corresponding filtered input signal (Fig. 15).

**Revendications**

1. Système de relais de protection comprenant des moyens générateurs de référence (10; 12, 9) pour engendrer une référence prédéterminée (53), une unité de traitement (9) ccmprenant des moyens pour produire un signal de sélection (S1), des moyens sélecteurs (8) pour recevoir une pluralité de signaux d'entrée d'information (V) et connectés de manière à recevoir le signal de sélection (S1) provenant de l'unité de traitement (9) pour sélectionner l'une des signaux d'entrée d'information (V), de manière à produire un signal d'entrée sélectionné (S2) selon le signal de sélection (S1), et un comparateur (11) qui est indépendant de l'unité de traitement (9) et qui est couplé de manière à recevoir le signal d'entrée sélectionné (S2), provenant des moyens sélecteurs (8), et la référence prédéterminée (S3), provenant des moyens générateurs de référence (10; 12, 9) afin de comparer le signal d'entrée sélectionné (S2) avec la référence prédéterminée (S3) et d'engendrer un signal de décision binaire unique (S4), délivré à l'unité de traitement (9) qui engendre un signal de sortie de relais (S5), caractérisé en ce que l'unité de traitement (9) est agencée de manière à n'engendrer le signal de sortie de relais (S5) que lorsque le signal de décision (S4) prend consécutivement une valeur logique prédéterminée, à plusieurs reprises dont le nombre est prédéterminé, et en ce que les moyens générateurs de référence (10; 12, 9) comprennent des moyens pour engendrer une pluralité de signaux de référence et des moyens pour sélectionner l'un des signaux de référence à titre de référence prédéterminée (S3).

2. Système de relais de protection selon la revendication 1, caractérisé en ce que les moyens générateurs de référence (10C; 10D) sont agencés de façon à engendrer au moins deux signaux de sortie de référence (S101, S102; S101, S104) et qu'ils comprennent des moyens de commutation (103) commandés par un signal de commutation (S103), provenant des moyens de traitement (9), pour sélectionner l'un des signaux de sortie de référence à titre de référence prédéterminée (S3) (Fig. 6 et 7).

3. Système de relais de protection selon la revendication 2, caractérisé en ce que les moyens générateurs (10C) comprennent au moins deux unités de référence (101, 102) dont chacune est prévue pour engendrer un signal de sortie de référence séparé (S101 ou S102) qui est appliqué aux moyens de commutation (103) (Fig. 6).

4. Système de relais de protection selon la revendication 2, caractérisé en ce que les moyens générateurs (10D) comprennent une unité de référence (101) pour engendrer un signal de sortie de référence (S101), un inverseur (104) connecté de façon à recevoir le signal de sortie de référence et à produire un signal de référence inversé (S104), et des moyens pour appliquer le signal de sortie de référence (S101) et le signal de référence inversé (S104) aux moyens de commutation (103) (Fig. 7).

5. Système de relais de protection selon l'une quelconque des revendications précédentes, caractérisé en ce que les moyens générateurs de référence, ou chacun des moyens générateurs de référence, comprennent une source d'alimentation en énergie électrique ayant une première et une deuxième borne (Vcc, To); une borne de sortie ($T_{OUT}$), une première résistance (R1) couplée entre la première borne (Vcc) de la source d'alimentation et la borne de sortie ($T_{OUT}$); une pluralité de secondes résistances (T2—Tm) ayant chacune une première et une deuxième borne, chacune des premières bornes des secondes résistances ètant couplée à la borne de sortie ($T_{OUT}$); et des seconds moyens sélecteurs couplés entre la deuxième borne (To) de la source d'alimentation et les deuxièmes bornes des secondes résistances (T2—Tm) pour coupler sélectivement les deuxièmes bornes de l'une quelconque des secondes résistances avec la deuxième borne ($T_0$) de la source d'alimentation en énergie (Fig. 3).

6. Système de relais de protection selon la revendication 1, caractérisé en ce que les moyens générateurs de référence (10; 12, 9) comprennent des moyens (12, 9) pour produire un signal de référence numérique (S6), un convertisseur numérique-analogique (105) pour transformer le signal de référence numérique (S6) en un signal de référence analogique, et des moyens pour appliquer le signal analogique aux moyens comparateurs (11) à titre de référence prédéterminée (S3) (Fig. 9—11, 13, 14).

7. Système de relais de protection selon la revendication 6, caractérisé en ce que le moyen de traitement (9) est agencé de façon à produire le signal de référence numérique (S6).

8. Système de relais de protection selon la revendication 7, caractérisé en ce qu'il y a un circuit de sortie de référence (12) pour produire un signal numérique (S12) et pour appliquer ce signal au moyen de traitement (9) qui est agencé pour le transformer en le signal de référence numérique (S6) (Fig. 10).

9. Système de relais de protection selon la revendication 8, caractérisé en ce que le moyen de traitement (9) est agencé de façon à produire un premier signal de lecture (S51) et un second signal de lecture (S52), et en ce que le circuit de sortie de référence (12) comprend une première unité de référence (121) pour produire un premier signal de référence numérique (S121); une seconde unité de référence (122) pour produire un deuxième signal de référence numérique (S122); et des moyens, couplés avec l'unité de traitement (9), pour recevoir le premier signal de lecture (S51) et le second signal de lecture (S52) et pour sélectionner l'un des premier et second signaux de référence numérique (Fig. 10).

10. Système de relais de protection selon la revendication 8, caractérisé en ce que les moyens (12, 9) comprennent, en outre, un premier et un second moyen de blocage (22, 23), et en ce que l'unité de traitement (9) est, en outre, agencée de façon à produire un premier signal d'écriture (S24) et un second signal d'écriture (S25); l'unité de traitement (9) convertissant le signal numérique (S12) en un signal numérique dilaté ayant une longueur de bit supérieure à celle du signal numérique (S12), et séparant le signal numérique dilaté en un signal de bit inférieur (S61) et un signal de bit supérieur (S62); le premier moyen de blocage (22) étant couplé de façon à recevoir le signal de bit inférieur (S61) et le premier signal d'écriture (S24) provenant de l'unité de traitement (9) afin de bloquer le signal de bit inférieur, de façon à produire un signal de référence de bit inférieur (S22) en réponse à la réception du premier signal d'écriture (S24); le second moyen de blocage (23) étant couplé de façon à recevoir le signal de bit supérieur (S62) et le second signal d'écriture (S25) provenant de l'unité de traitement (9) afin de bloquer le signal de bit supérieur (S62), de façon à produire un signal de référence de bit supérieur (S23) en réponse à la réception du second signal d'écriture (S25); le convertisseur numérique-analogique (105) étant couplé au premier moyen de blocage (22) pour recevoir le signal de référence de bit inférieur (S22) et couplé au second moyen de blocage (23) pour recevoir le signal de référence de bit supérieur (S23) à titre de signal de référence numérique (S6) (Fig. 12).

11. Système de relais de protection selon l'une quelconque des revendications 8 à 10, caractérisé en ce que l'unité de traitement (9) est, en outre, agencée de façon à convertir le signal numérique (S12) en un premier signal de référence, à inverser le premier signal de référence de façon à former un signal de référence inversé, et à sélectionner le premier signal de référence ou le signal de référence inversé de façon à former le signal de référence numérique (S6).

12. Système de relais de protection selon la revendication 7, caractérisé en ce que les moyens (12, 9) pour produire le signal de référence numérique (S6) comprennent un circuit de sortie de référence (12) pour produire un signal numérique (S12), des moyens de conversion (21) couplés de façon à recevoir le signal numérique (S12) afin de transformer le signal numérique (S12) en un signal de référence (S21), l'unité de traitement (9) étant connectée de façon à recevoir le signal de référence (S21) afin d'inverser le signal de référence (S21), en le transformant en un signal de référence inversé, et de sélectionner un signal choisi parmi le signal de référence (S21) et le signal de référence inversé, afin de produire le signal de référence numérique (S6) (Fig. 14).

13. Système de relais de protection selon la revendication 6, caractérisé en ce que les moyens (12, 9) pour produire le signal de référence numérique comprennent un circuit de sortie de référence (12) pour produire un signal numérique (S12) et des moyens de conversion (21) couplés pour recevoir le signal numérique (S12) provenant du circuit de sortie de référence (12) et couplés pour recevoir un signal d'autorisation (S26 ou S27) provenant de l'unité de traitement (9), afin de transformer le signal numérique (S12) en le signal de référence numérique (S6), en réponse au signal d'autorisation (Fig. 13).

14. Système de relais de protection selon la revendication 13, caractérisé en ce que l'unité de traitement (9) est, en outre, agencée de façon à recevoir, des moyens de conversion (21), le signal de référence numérique (S6) et à contrôler ce signal de référence numérique (S6).

15. Système de relais de protection selon la revendication 13 ou la revendication 14, caractérisé en ce que le signal d'autorisation comprend un premier signal d'habilitation et un second signal d'habilitation; les moyens de conversion (21) comprennent une première unité de conversion (24) et une seconde unité de conversion (25); la première unité de conversion (24) est couplée de façon à recevoir le signal numérique (S12), provenant du dircuit de sortie de référence (12), et le premier signal d'habilitation, provenant des moyens de traitement (9), et transforme le signal numérique en un premier signal de référence, en réponse au premier signal d'habilitation; et la seconde unité de conversion (25) est couplée pour recevoir le signal numérique (S12), provenant du dircuit de sortie de référence (12), et le second signal d'habilitation provenant de l'unité de traitement (9), et transforme le signal numérique, de façon à former un signal de référence inversé, en réponse au second signal d'habilitation; le premier signal de référence ou le signal de référence inversé formant le signal de référence numérique (S6) (Fig. 13).

16. Système de relais de protection selon l'une quelconque des revendications 1 à 3 et 7 à 10, caractérisé en ce qu'il comprend une pluralité de moyens redresseurs à deux alternances (30) couplés aux entrées des moyens sélecteurs (8) afin d'effectuer le redressement à deux alternances de la pluralité de signaux d'entrée (V) (Fig. 14).

17. Système de relais de protection selon l'une quelconque des revendications précédentes 1 à 15, caractérisé en ce qu'il comprend une pluralité de moyens transformateurs d'entrée (7) couplés aux entrées des moyens sélecteurs (8) afin de convertir les signaux d'entrée (V) en une pluralité de signaux d'entrée transformés ayant des niveaux de tension prédéterminés.

18. Système de relais de protection selon la revendication 16, caractérisé en ce qu'il comprend une pluralité de moyens transformateurs d'entrée (7), couplés aux moyens redresseurs à deux alternances (30), afin de convertir les signaux d'entrée (V) en une pluralité de signaux d'entrée transformés ayant des niveaux de tension prédéterminés (Fig. 14).

19. Système de relais de protection selon la revendication 17, caractérisé en ce qu'il comprend des moyens de traitement de signal d'entrée (40), couplés entre les moyens transformateurs d'entrée (7) et les moyens sélecteurs (8) et comprenant des moyens de filtre passe-bande (13) couplés de façon à recevoir la pluralité de signaux d'entrée transformés provenant de la pluralité de moyens de transformateurs d'entrée (7) afin de filtrer chacun des signaux d'entrée transformés et pour produire une pluralité de signaux d'entrée filtrés (S13) qui sont fournis aux moyens sélecteurs (8); et des moyens de circuit différential (14) couplés de façon à recevoir les signaux d'entrée transformés, provenant des moyens transformateurs d'entrée, et les signaux d'entré filtrés (S13), provenant des moyens de filtre passe-bande (13), afin de produire une pluralité de signaux d'entrée différentiels (S14), les signaux d'entrée différentiels étant fournis aux moyens sélecteurs (8), chacun des signaux d'entrée différentiels (S14) étant la différence entre l'un des signaux d'entrée transformés et le signal d'entrée filtré correspondant (Fig. 15).

**Patentansprüche**

1. Schutzschaltung mit einer Bezugssignal-Generatorschaltung (10, 12, 9) zur Erzeugung eines vorgegebenen Bezugssignals (S3), mit einer Datenverarbeitungseinheit (9), mit einer Schaltung, die ein Auswahlsignal (S1) erzeugt, mit einer Auswählschaltung (8) die von mehreren Eingangssignalen (V) ansteuerbar und schaltungsmäßig derart angeordnet ist, daß ihr von der Datenverarbeitungseinheit (9) das Auswahlsignal (S1) zur Auswahl eines der Eingangssignale (V) aufschaltbar ist, welches, in Abhängigkeit vom Auswählsignal (S1) zur Erzeugung eines bestimmten Eingangssignals (S2) herangezogen wird, und mit einem von der Datenverarbeitungseinheit (9) unabhängigen Komperator (11), dem von der Auswahlschaltung (8) das bestimmte Eingangssignal (S2) und von der Bezugssignal-Generatorschaltung (10, 12, 9) das vorgegebene Bezugssignal (S3) aufschaltbar ist, welche zur Erzeugung eines einfach binären Entscheidungssignals (S4) verglichen werden, das dann zur Datenverarbeitungseinheit (9) weitergeleitet wird, die ihrerseits ein Relais-Ausgangssignal (S5) erzeugt, dadurch gekennzeichnet, daß die Datenverarbeitungseinheit (9) derart ausgelegt ist, daß von ihr nur dann ein Relais-Ausgangssignal (S5) erzeugt wird, wenn das Entscheidungssignal (S4) für einen vorgegebenen Zeitraum einen vorgegebenen Logigwert annimmt, und daß die Bezugssignal-Generatorschaltung (10, 12, 9) sowohl eine Schaltung aufweist, die mehrere Bezugssignale erzeugt, als auch eine Schaltung, welche eines der Bezugssignale als das vorgegebene Bezugssignal (S3) auswählt.

2. Schutzschaltung nach Anspruch 1, dadurch gekennzeichnet, daß die Bezugssignal-Generatorschaltung (10C, 10D) mindestens zwei Ausgangs-Bezugssignale (S101, S102; S101, S104) erzeugt und einen Schaltkreis (103) aufweist, der durch ein Schaltsignal (S103) der Datenverarbeitungseinheit (9) angesteuert wird, so daß aus den Ausgangs-Bezugssignalen eines als das vorgegebene Bezugssignal (S3) ausgewählt wird (Fig. 6 und 7).

3. Schutzschaltung nach Anspruch 2, dadurch gekennzeichnet, daß die Bezugssignal-Generatorschaltung (10C) aus mindestens zwei Bezugssignal-Generatoren (101, 102) besteht, die jeweils getrennte Ausgangs-Bezugssignale (S101 oder S102) erzeugen, welche auf den Schaltkreis (103) geführt werden (Fig. 6).

4. Schutzschaltung nach Anspruch 2, dadurch gekennzeichnet, daß die Bezugssignal-Generatorschaltung (10D) einen Bezugssignal-Generator (101), an dessen Ausgang ein Bezugssignal (S101) abgerufen werden kann, eine Inverterschaltung (104), die das Bezugssignal (S101) invertiert und als Bezugssignal (S104) ausgibt und Mittel durch die die Bezugssignale (S101 und S104) zum Schaltkreis (103) weitergeleitet werden aufweist (Fig. 7).

5. Schutzschaltung nach mindestens einem der Ansprüche 1 bis 4, dadurch gekennzeichnet, daß zur Bezugssignal-Generatorschaltung gehören, eine Stromversorgung mit einem ersten Anschluß (Vcc) und einem zweiten Anschluß (To), ein Ausgang (T OUT), ein Widerstand (R1), der zwischen dem ersten Anschluß (Vcc) und dem Ausgang (T OUT) angeordnet ist, mehrere zweite Widerstände (T2 bis Tm) deren einer Anschluß mit dem Ausgang (T OUT) verbunden ist, und einer zweiten Auswählschaltung, die zwischen dem zweiten Anschluß (To) und den jeweils freien Anschlüssen der zweiten Widerstände (T2 bis Tm) angeordnet ist, wobei der Anschluß (To) selektiv mit einem beliebigen der jeweils freien Anschlüsse der zweiten Widerstände (T2 bis Tm) verbunden werden kann (Fig. 3).

6. Schutzschaltung nach Anspruch 1, dadurch gekennzeichnet, daß zur Bezugssignal-Generatorschaltung (10, 12, 9) gehören Schaltungen (12, 9) zur Erzeugung eines digitalen Bezugssignals (S6), ein Digitan-Analogwandler (105), der das digitale Bezugssignal (S6) in ein Analoges Bezugssignal umsetzt, und Mittel, durch die das analoge Bezugssignal dem Komparator (11) als vorgegebenes Bezugssignal (S3) zugeführt wird (Fig. 9 bis 11, Fig. 13 und 14).

7. Schutzschaltung nach Anspruch 6, dadurch gekennzeichnet, daß die Datenverarbeitungseinheit (9) das digitale Bezugssignal (S6) erzeugt.

8. Schutzschaltung nach Anspruch 7, dadurch gekennzeichnet, daß ein Bezugssignal-Ausgangskreis (12) ein digitales Signal (S12) erzeugt, welches der Datenverarbeitungseinheit (9) aufgeschaltet wird, die dieses in das digitale Bezugssignal (S6) umsetzt (Fig. 10).

9. Schutzschaltung nach Anspruch 8, dadurch gekennzeichnet, daß die Datenverarbeitungseinheit (9) ein erstes Lesesignal (S51) und ein zweites Lesesignal (S52) erzeugt, daß der Bezugssignal-Ausgangskreis (12) aus einem ersten Bezugssignal-Generator (121), der ein erstes digitales Bezugssignal (S121) erzeugt, und aus einem zweiten Bezugssignal-Generator (122), der ein zweites digitales Bezugssignal (S122) erzeugt besteht, und daß mit der Datenverarbeitungseinheit (9) eine Schaltung verbunden ist, der die Lesesignale (S51 und S52) aufgeschaltet werden und die eines der ersten und zweiten digitalen Bezugssignale auswählt (Fig. 10).

10. Schutzschaltung nach Anspruch 8, dadurch gekennzeichnet, daß den Schaltungen (12, 9) zwei selbsthaltende Schaltkreise (22 und 23) zugeordnet sind, daß die Datenverarbeitungseinheit (9) ein erstes Schreibsignal (S24) und ein zweites Schreibsignal (S25) erzeugt, daß die Datenverarbeitungseinheit (9) das digitale Signal (S12) in ein expandiertes, eine größere Wortlänge aufweisendes digitales Signal umsetzt, das expandierte digitale Signal in einen Signalteil (S61) der die niederwertigeren Bits und in einen Signalteil (S62) der die höher-wertigeren Bits beinhaltet trennt, daß dem ersten selbsthaltenden Schaltkreis (22) der Signalteil (S61) der die niederwertigeren Bits beinhaltet sowie von der Datenverarbeitungseinheit (9) das erste Schreibsignal (S24) aufgeschaltet wird, daß der selbsthaltende Schaltkreis (22) nach Empfang des Schreibsignals (S24) ein Bezugssignal mit niederwertigerem Bitanteil erzeugt, daß dem zweiten selbsthaltenden Schaltkreis (23) der Signalteil (S62) der die höherwertigeren Bits beinhaltet sowie von der Datenverarbeitungseinheit (9) das zweite Schreibsignal (S25) aufgeschaltet wird, daß der selbsthaltende Schaltkreis (23) nach Empfang des Schreibsignals (S25) ein Bezugssignal (S23) mit höherwertigerem Bitanteil erzeugt, und daß dem Digital-Analogwandler (105) das Bezugssignal (S22) mit dem niederwertigeren Bitanteil und das Bezugssignal (S23) mit dem höherwertigeren Bitanteil als das digitale Bezugssignal (S6) aufgeschaltet wird (Fig. 12).

11. Schutzschaltung nach mindestens einem der Ansprüche 8 bis 10, dadurch gekennzeichnet, daß die Datenverarbeitungseinheit (9) das digitale Signal (S12) in ein erstes Bezugssignal umsetzt, daß erste Bezugssignal in ein invertiertes Bezugssignal umwandelt, und entweder das erste Bezugssignal oder das invertierte Bezugssignal auswählt um daraus das digitale Bezugssignal (S6) abzuleiten.

12. Schutzschaltung nach Anspruch 7, dadurch gekennzeichnet, daß den Schaltungen (12, 9) die das digitale Bezugssignal (S6) erzeugen, ein Bezugssignal-Ausgangskreis (12) zugeordnet ist, der ein digitales Signal (S12) erzeugt daß eine Wandlerschaltung (21) vorgesehen ist, die das digitale Signal (S12) in ein Bezugssignal (S21) umformt, daß der Datenverarbeitungseinheit (S9) das Bezugssignal (S21) aufgeschaltet wird, und daß die Datenverarbeitungseinheit (9) das Bezugssignal (S21) in ein invertiertes Bezugssignal umwandelt und entweder das Bezugssignal (S21) oder das invertierte Bezugssignal auswählt um das digitale Bezugssignal (S6) zu erzeugen (Fig. 14).

13. Schutzschaltung nach Anspruch 6, dadurch gekennzeichnet, daß zu den Schaltungen (12, 9) zur Erzeugung des digitalen Bezugssignals ein Bezugssignal-Ausgangskreis (12), der ein digitales Signal (S12) erzeugt und eine Wandlerschaltung (21) gehört, der von dem Bezugssignal-Ausgangskreis (12) das digitale Signal (S12) aufgeschaltet wird, und der von der Datenverarbeitungseinheit (9) ein Befehlssignal (S26 oder S27) zugeführt wird und die im Bezug auf dieses Befehlssignal das digitale Signal (S12) in das digitale Bezugssignal (S6) umformt (Fig. 13).

14. Schutzschaltung nach Anspruch 13, dadurch gekennzeichnet, daß der Datenverarbeitungseinheit (9) von der Wandlerschaltung (21) das digitale Bezugssignal (S6) aufgeschaltet wird und daß die Datenverarbeitungseinheit (9) das digitale Bezugssignal (S6) überprüft.

15. Schutzschaltung nach Anspruch 13 oder 14, dadurch gekennzeichnet, daß das Befehlssignal aus einem ersten Freigabesignal und aus einem zweiten Freigabesignal besteht, daß die Wandlerschaltung (21) aus einer ersten Wandlereinheit (24) und aus einer zweiten Wandlereinheit (25) besteht, daß der ersten Wandlereinheit (24) vom Bezugssignal-Ausgangskreis (12) das digitale Signal (S12) und von der Datenverarbeitungseinheit (9) das erste Freigabesignal aufgeschaltet wird, daß die erste Wandlereinheit (24) das digitale Signal (S12) im Ansprechen auf das erste Freigabesignal in ein erstes Bezugssignal umformt, daß der zweiten Wandlereinheit (25) vom Bezugssignal-Ausgangskreis (12) das digitale Signal (S12) und von der Datenverarbeitungseinheit (9) das zweite Freigabesignal aufgeschaltet wird, daß die zweite Wandlereinheit (25) das digitale Signal im Ansprechen auf das zweite Freigabesignal in ein invertiertes Bezugssignal umformt und daß das erste Bezugssignal oder das invertierte Bezugssignal das digitale Bezugssignal (S6) bildet (Fig. 13).

16. Schutzschaltung nach mindestens einem der Ansprüche 1 bis 3 bzw. 7 bis 10, dadurch gekennzeichnet, daß Vollwegegleichrichter (30) mit den Eingängen der Auswahlschaltung (8) verbunden sind um die Eingangssignale (V) gleichzurichten (Fig. 14).

17. Schutzschaltung nach mindestens einem der Ansprüche 1 bis 15, dadurch gekennzeichnet, daß Eingangstransformatoren (7) mit den Eingängen der Auswahlschaltung (8) verbunden sind und die Eingangssignale (V) in Eingangssignale mit vorgegebenen Spannungspegeln umformen.

18. Schutzschaltung nach Anspruch 16, dadurch gekennzeichnet, daß Eingangstransformatoren (7) mit den Vollwegegleichrichtern (30) derart verbunden sind, daß die Eingangssignale (V) in Eingangssignale mit vorgegebenen Spannungspegeln umgeformt werden (Fig. 14).

19. Schutzschaltung nach Anspruch 17, dadurch gekennzeichnet, daß eine Eingangssignal-Verarbeitungseinheit (40) zwischen den Eingangstransformatoren (7) und der Auswahlschaltung (8) angeordnet ist, daß Bandpaßfilter vorgesehen sind, denen die von den Eingangstransformatoren erzeugten Eingangssignale mit vorgegebenen Spannungspegeln aufgeschaltet sind und die gefilterte Eingangssignale (S13) an die Auswahlschaltung (8) liefern, daß Differenzenschaltungen (14) von den Eingangstransformatoren (7) die umgeformten Eingangssignale und von den Bandpaßfiltern (13) die gefilterten Eingangssignale (S13) aufgeschaltet werden, und daß die Differenzenschaltungen Eingangs-Differenzsignale (S14) liefern, die zur Auswahlschaltung (8) weitergeleitet werden, wobei jedes Eingangs-Differenzsignal (S14) die Differenz aus einem der umgeformten Eingangssignale und dem jeweils zutreffenden gefilterten Eingangssignal bildet (Fig. 15).

(PRIOR ART)

FIG. 1.

FIG. 2.

0 040 471

**0 040 471**

Fig. 3.

Fig. 4A.

S3

S2(I1)

t0 t1 t2 t3 t4 t5 t6 t7    t8 t9 t10 t11 t12 t13 t14    t15    t16 t17    t19 t20 t21 t22    t23
                                                                        t18

"1"
S4 "0"
t'17   t'18  t'19  t'20  t'21

"1"
S5 "0"

FIG. 4B

0 040 471

3

$I_m$ → | INPUT TRANSFORMER | $7m$

$V_m$   40   14 → | DIFFERENCE CIRCUIT | S14   8 → | MULTIPLEXER | → S2

13 → | BAND PASS FILTER | → S13

FIG. 15.

0 040 471

200B

71 INPUT TRANSFORMER

$I_1$ → $V_1$

$30_1$ FULL WAVE RECTIFIER

S1

S2

$11$ COMPARATOR S4

9B

$7_N$ INPUT TRANSFORMER

$I_N$ → $V_N$

$30_N$ FULL WAVE RECTIFIER

MULTIPLEXER 8

S3

PROCESSING UNIT → S5

REFERENCE OUTPUT CIRCUIT 10

*Fig.5.*

200C

$7_1$ INPUT TRANSFORMER

$I_1$ → $V_1$

8 S2

S1

$11$ COMPARATOR S4

9C

$7_N$ INPUT TRANSFORMER

$I_N$ → $V_N$

MULTIPLEXER

S3

10C

103 SWITCHING CIRCUIT S103

PROCESSING UNIT → S5

S102

S101

SECOND REFERENCE UNIT 102

FIRST REFERENCE UNIT 101

REFERENCE OUTPUT CIRCUIT

*Fig.6.*

FIG.7.

*Fig.8.*

51 — GENERATE SELECTION SIGNAL SI; APPLY SIGNAL SI TO MULTIPLEXER

51A — GENERATE SWITCHING SIGNAL SIO3 FOR SELECTING FIRST REFERENCE SIGNAL IOI; APPLY SIGNAL SIO3 TO REFERENCE OUTPUT CIRCUIT

52 — READ OUTPUT OF COMPARATOR (S4)

53 — IS S4 EQUAL TO "I" — NO / YES

57 — GENERATE SWITCHING SIGNAL SIO3 FOR SELECTING INVERTED REFERENCE SIGNAL SIO4; APPLY SIGNAL SIO3 TO REFERENCE OUTPUT CIRCUIT

58 — READ OUTPUT OF COMPARATOR (S4)

59 — IS S4 EQUAL TO "0" — NO / YES

54 — COUNT NUMBER "m" OF SIGNAL S4

55 — COMPARE m TO n WHERE n IS AN INTEGER — m < n

56 — GENERATE RELAY OUTPUT SIGNAL S5

S5

FIG.9.

FIG.IO.

0 040 471

FIG.11.

FIG.12.

0 040 471

*Fig.13.*

*Fig.14.*

0 040 471